# EUROPEAN PATENT SPECIFICATION

(11) **EP 4 501 815 B1**
(45) Date of publication and mention of the grant of the patent: **30.07.2025**
(21) Application number: 24191521.4
(22) Date of filing: 29.07.2024
(51) Int. Cl.: B65G 1/04, B65G 1/137

(54) **CONTAINER TRANSPORT FACILITY**
CONTAINERTRANSPORTANLAGE
INSTALLATION DE TRANSPORT DE CONTENEURS

(30) Priority: 03.08.2023 JP 2023126917
(43) Date of publication of application: 05.02.2025
(73) Proprietor: Daifuku Co., Ltd., Osaka-shi, Osaka 555-0012 (JP)
(72) Inventor: SIRAISI, Tooru, Tokyo, 1050022 (JP); KAWAMOTO, Makoto, Tokyo, 1050022 (JP); AIKA, Shota, Tokyo, 1050022 (JP)
(74) Representative: Grosse, Felix Christopher

(56) References cited:
- JP-A- S5 992 805
- JP-B1- 6 592 711
- TW-A- 201 139 252
- TW-B- I 810 317
- US-A1- 2022 363 475

## Description

The present invention relates to a container transport facility including a transport vehicle that transports a container that is configured to be step-stacked in an up-down direction, a storage shelf that stores the container, and a work area in which target work, which is at least one of taking-out work of an article from the container and inputting work of the article into the container, is performed.

Such a facility constitutes a part of a logistics system. In recent years, in the logistics system for which the demand has been increasing, various efforts have been made to realize smooth logistics.

As one of the efforts, for example, JP 2001 - 297 140 A discloses that an article having a high storage and retrieval frequency among articles to be handled by a facility is provided such that the article is stored at a position from which the article is more easily retrieved than an article having a low storage and retrieval frequency. As a result, it is expected that transport efficiency in the facility is able to be improved. However, JP 2001 - 297 140 A does not disclose a specific configuration for improving the transport efficiency.

US 2022/363475 A1 discloses a container transport facility according to the preamble of claim 1.

In view of the above-described actual situation, there is a demand for realizing a container transport facility capable of improving a transport efficiency.

The technique for achieving the above object is as follows.

A container transport facility including a transport vehicle configured to transport at least one container that is configured to be step-stacked in an up-down direction; a storage shelf configured to store the container; and a work area in which target work, which is at least one of taking-out work of an article from the container and inputting work of the article into the container, is performed, in which the at least one container includes a plurality of containers, the storage shelf is configured to include a plurality of steps of a shelf portion that supports each container in the up-down direction, and store the plurality of containers in a state of being separated from each other, the transport vehicle includes a traveling body configured to travel, a support portion configured to be mounted on the traveling body and support the plurality of containers as a step-stacking container group which is a container group in a step-stacked state, a first transfer device configured to be mounted on the traveling body and transfer the containers between the storage shelf and the step-stacking container group supported by the support portion, and a second transfer device configured to be mounted on the traveling body and transfer the step-stacking container group, the work area is provided with a delivery portion through which the step-stacking container group is delivered between the delivery portion and the support portion, a holding area is provided at a location different from the work area and the storage shelf, the holding area includes a holding portion configured to hold the step-stacking container group, and the holding portion is configured to transfer the step-stacking container group between the holding portion and the support portion by the second transfer device.

According to the present configuration, the step-stacking container group is able to be held in the holding area. Therefore, for example, by holding a specific container in the holding area, such as a container for which transportation to the work area is scheduled or a container with a high frequency of transportation to the work area, work of the transport vehicle for returning the container to the storage shelf or taking out the container from the storage shelf is suppressed to be small, and it is easy to improve the transport efficiency of the container by the transport vehicle. In addition, according to the present configuration, the plurality of containers in a step-stacked state is able to be transferred at once between the transport vehicle and the holding area. Further, the delivery of the step-stacking container group is performed even in the delivery portion of the work area. Therefore, it is easy to improve the transport efficiency of the container by the transport vehicle even at these points. In addition, according to the present configuration, the plurality of containers are held in a step-stacked state in the holding area, so that it is easy to suppress a floor area occupied by the holding area to be small. In addition, according to the present configuration, the storage shelf is configured to store the plurality of containers in a state of being separated from each other by the plurality of steps of the shelf portion. Therefore, in the storage shelf, a large number of containers is able to be appropriately stored in a state in which the individual containers are easily transferred to the transport vehicle.

It is preferable that a path of the transport vehicle extending along the storage shelf is defined as a shelf region inner path, and the holding portion of the holding area is disposed at a position along a connection path connecting the shelf region inner path and the delivery portion.

According to the present configuration, it is easy to efficiently travel the transport vehicle between the storage shelf, the holding area, and the work area. Therefore, the transport efficiency of the container by the transport vehicle is able to be easily increased.

It is preferable that the container transport facility further includes a control system that controls the transport vehicle, in which the holding area is disposed in a region between the storage shelf and the work area, the control system is configured to manage the plurality of containers by dividing the plurality of containers into a general container and a high-frequency container having a higher frequency of being transported to the work area than the general container based on a type of the article accommodated in each of the containers, and the transport vehicle transports the step-stacking container group including the high-frequency container at least in part to the holding area based on an instruction from the control system.

According to the present configuration, the container having a high frequency of being transported to the work area is able to be held by the holding portion of the holding area disposed in the region between the storage shelf and the work area. Therefore, it is easy to suppress the traveling distance of the transport vehicle to be short in a case in which the transport vehicle transports the high-frequency container. Therefore, it is easy to suppress the traveling distance of the transport vehicle to be short as a whole, and as a result, it is easy to increase the transport efficiency of the container by the transport vehicle.

It is preferable that the control system periodically reviews the division between the general container and the high-frequency container, and the transport vehicle transports the container changed from the high-frequency container to the general container from the holding area to the storage shelf the container changed from the general container to the high-frequency container from the storage shelf to the holding area based on an instruction from the control system.

According to the present configuration, a state in which the container having a high frequency of being transported to the work area is held by the holding portion of the holding area is able to be maintained for a long period of time.

It is preferable that the control system defines the container in which a frequency of being transported to the work area in the high-frequency container is equal to or greater than a predetermined threshold value as an ultrahigh-frequency container, and the transport vehicle creates the step-stacking container group configured of only the ultrahigh-frequency containers and transports the step-stacking container group to the holding area based on an instruction from the control system.

According to the present configuration, the ultrahigh-frequency container having an extremely high frequency of being transported to work area is able to be held in the holding area by being grouped into one step-stacking container group. Therefore, it is easy to suppress the traveling distance of the transport vehicle to be short, and as a result, it is easy to increase the transport efficiency of the container by the transport vehicle.

It is preferable that the container transport facility further includes a control system that controls the transport vehicle, in which the transport vehicle travels a path which returns to the delivery portion from the delivery portion of the work area via both the storage shelf and the holding area based on an instruction from the control system.

According to the present configuration, both the container stored in the storage shelf and the container held in the holding area are able to be transported to the work area, and the container for which target work in the work area is completed is able to be returned to either the storage shelf or the holding area.

It is preferable that the number of the containers, which is an upper limit that is able to be supported in the support portion by the transport vehicle on the support portion, is defined as a support upper limit number, and in a case in which the transport vehicle receives the container in both the storage shelf and the holding area, the number of the containers received from the storage shelf and supported by the support portion is set to be equal to or less than a difference between the support upper limit number and the number of the containers included in the step-stacking container group received from the holding portion of the holding area.

According to the present configuration, even in a case in which the transport vehicle receives the container in both the storage shelf and the holding area, the step-stacking container group held by the holding portion of the holding area is able to be received and supported by the support portion without being separated. Therefore, it is possible to reduce the necessity of providing a device or the like for separating the step-stacking container groups in both the holding area and the transport vehicle.

It is preferable that the transport vehicle further includes a lifting device that is mounted on the traveling body and is able to lift a part or all of the containers of the step-stacking container group supported by the support portion, in the step-stacking container group supported by the support portion, at least one container that is not lifted by the lifting device is defined as a residual container group, and the second transfer device is configured to transfer the step-stacking container group supported by the support portion to the holding portion, to transfer the residual container group to the holding portion, and to transfer the step-stacking container group held by the holding portion to the support portion.

According to the present configuration, the transfer of the step-stacking container group between the holding portion of the holding area and the support portion of the transport vehicle is able to be appropriately performed. In particular, according to the present configuration, it is possible to easily transfer a part of the containers or a part of the step-stacking container groups selected from the step-stacking container group supported by the support portion to the holding portion of the holding area.

The technique according to the present disclosure is able to be applied to a container transport facility including a transport vehicle that transports a container that is configured to be step-stacked in an up-down direction, a storage shelf that stores the container, and a work area in which target work, which is at least one of taking-out work of an article from the container and inputting work of the article into the container, is performed.

Further features and advantages of the technique according to the present invention will be more clearly understood from the following exemplary and non-limiting description of the embodiments with reference to the accompanying drawings, wherein
- Fig. 1: is a plan view of a container transport facility;
- Fig. 2: is a front view of a storage shelf;
- Fig. 3: is a control block view;
- Fig. 4: is a view of a transport vehicle in a vehicle body width direction;
- Fig. 5: is a plan view illustrating a first attitude and a second attitude of the transfer device;
- Fig. 6: is a view illustrating a transfer operation to a step-stacking region;
- Fig. 7: is a view illustrating a transfer operation to the step-stacking region;
- Fig. 8: is a view illustrating the transfer operation to the step-stacking region;
- Fig. 9: is a view illustrating a holding portion in a holding area;
- Fig. 10: is a plan view illustrating a state of transfer of a step-stacking container group between the transport vehicle and the holding portion;
- Fig. 11: is a side view illustrating a state of transfer of the step-stacking container group between the transport vehicle and the holding portion;
- Fig. 12: is a view illustrating a state in which the transport vehicle creates the step-stacking container group; and
- Fig. 13: is an explanatory view of a support upper limit number.

Hereinafter, embodiments of a container transport facility according to the present invention will be described with reference to the drawings.

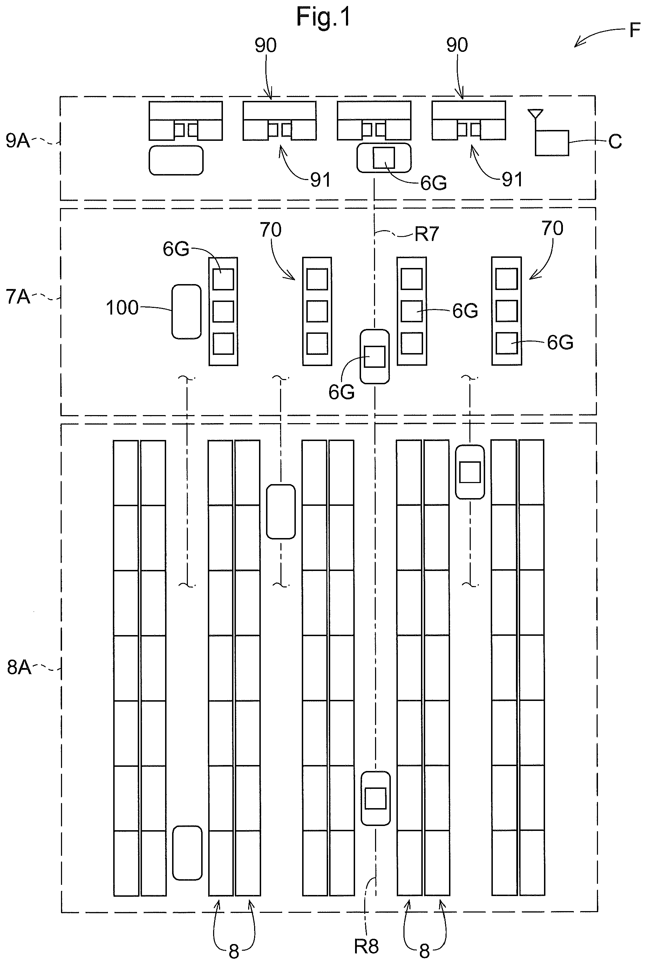

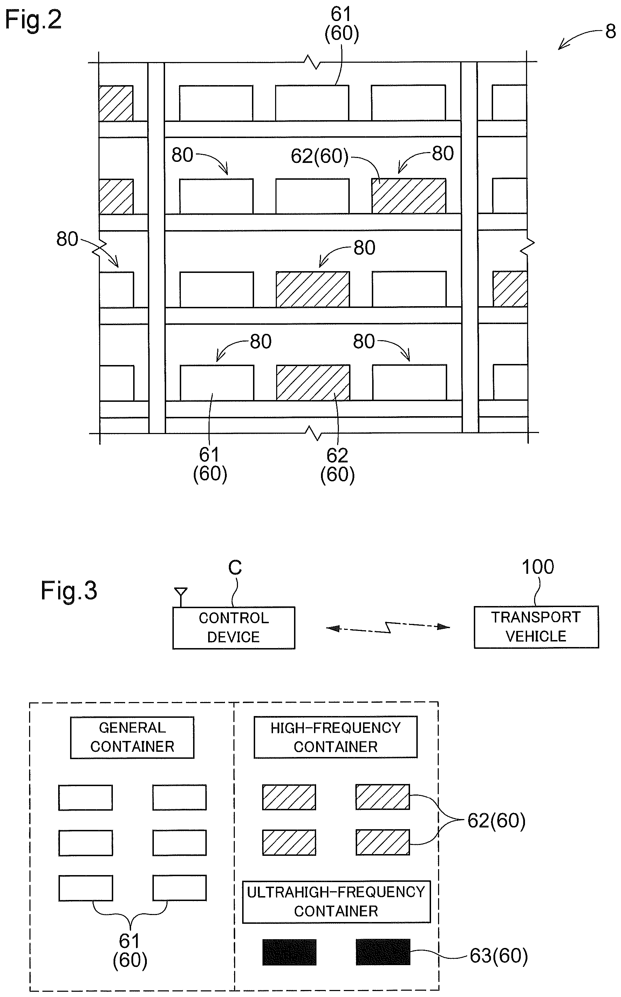

As illustrated in Fig. 1, a container transport facility F includes a transport vehicle 100 that transports a container 60 (see Fig. 2), a storage shelf 8 that stores the container 60, and a work area 9A in which target work, which is at least one of taking-out work of an article (not illustrated) from the container 60 and inputting work of the article into the container 60, is performed. In the present embodiment, the container transport facility F includes a storage area 8A.

A plurality of storage shelves 8 are provided in the storage area 8A. In addition, the container transport facility F further includes a control device C that controls the transport vehicle 100. In the present specification, the control device C corresponds to a "control system". However, the control device C may constitute at least a part of the control system. The control device C is configured to perform communication with a transport vehicle control unit (not illustrated) mounted on each of a plurality of transport vehicles 100 (see also Fig. 3).

The container 60 is configured to accommodate an article. The container 60 has a shape in which an upper side is open. The article is put into an inside of the container 60 via an upper opening portion of the container 60 or taken out from the inside of the container 60. The article includes, for example, various products such as food products and daily necessities, or components and workpieces used in a production line of a factory and the like. One container 60 is configured to accommodate the same type of article.

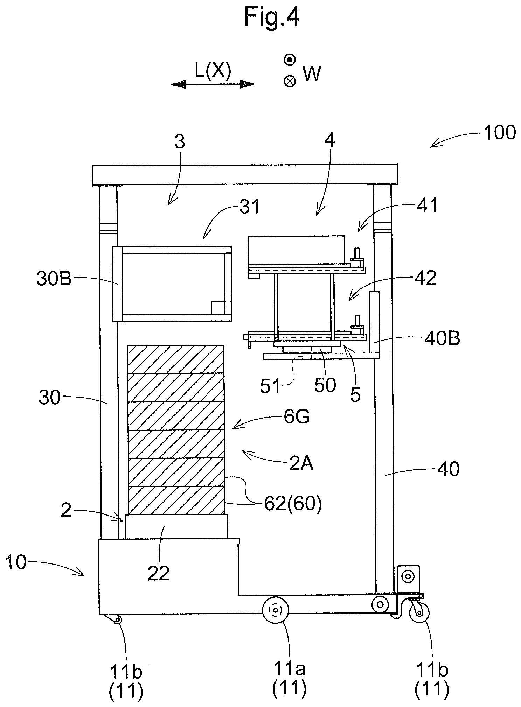

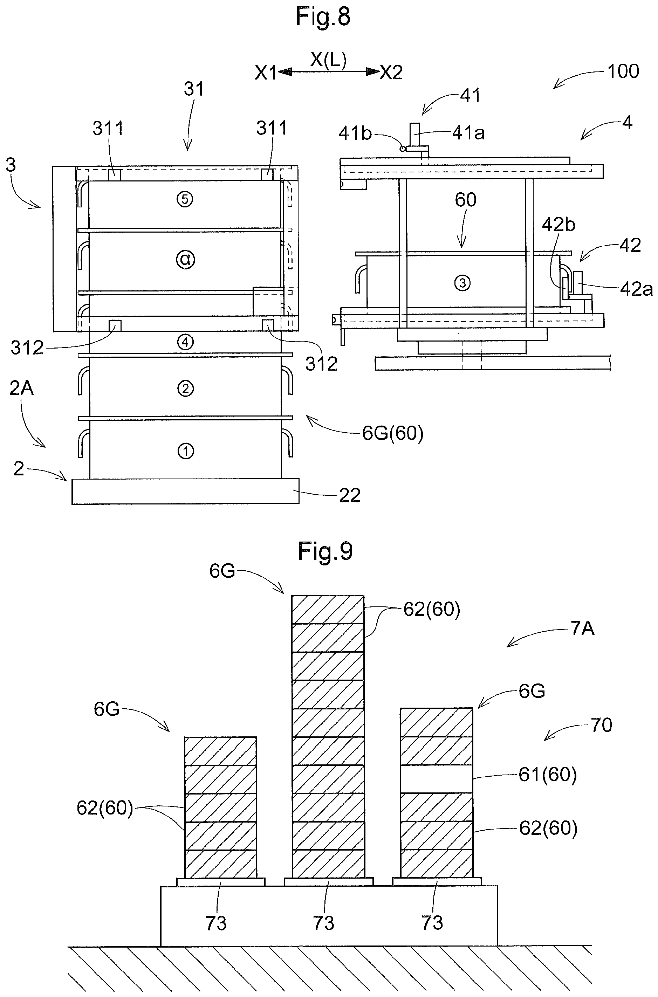

The container 60 is configured to be step-stackable in an up-down direction in a state in which the article is accommodated therein (see Figs. 4 and 9). A plurality of containers 60 are step-stacked in the up-down direction to form a step-stacking container group 6G. In the present example, a bottom portion of the container 60 is fitted from above to the opening portion of the other container 60, so that the two containers 60 are step-stacked in the up-down direction.

The work area 9A is provided with a delivery portion 90 through which the step-stacking container group 6G is delivered between the delivery portion 90 and a support portion 2 (see Fig. 4) of the transport vehicle 100. The delivery portion 90 carries in and carries out the container 60. The transport vehicle 100 transports the container 60 carried in to the delivery portion 90 to the storage shelf 8, or transports the container 60 stored in the storage shelf 8 to the delivery portion 90 for carrying out.

In the present embodiment, a separation device 91 that separates respective containers 60 constituting the step-stacking container group 6G is provided in the work area 9A. The step-stacking container group 6G handed over to the delivery portion 90 is separated into a plurality of containers 60 by the separation device 91. In the work area 9A, for each of the separated plurality of containers 60, taking-out work of the article from the container 60 or inputting work of the article into the container 60 is performed. However, the separation device 91 is not an essential configuration. The separation of respective containers 60 from the step-stacking container group 6G may be performed by hand.

In the present embodiment, the plurality of storage shelves 8 are disposed in parallel to each other with a predetermined interval therebetween. At least a front surface of each of the plurality of storage shelves 8 is open, and the container 60 is taken in and out on the front surface. In the present example, a pair of storage shelves 8 are disposed in a state in which rear surfaces thereof face each other and are close to each other. A plurality of sets of the pair of storage shelves 8 of which the rear surfaces face each other are disposed in the storage area 8A.

A part of a travel path of the transport vehicle 100 is set to extend along each of the plurality of storage shelves 8. In the present embodiment, the path of the transport vehicle 100 extending along the storage shelf 8 is defined as a shelf region inner path R8. The transport vehicle 100 is able to travel in the shelf region inner path R8, so that it is possible to perform the movement in the storage area 8A and the transfer of the container 60 to the storage shelf 8. In the present example, the shelf region inner path R8 is provided along the front surface (surface on which the container 60 is taken in and out) of each of the plurality of storage shelves 8. In the pair of storage shelves 8 disposed to face each other on the front surfaces, one shelf region inner path R8 is shared.

As illustrated in Fig. 2, the storage shelf 8 is configured to include a plurality of steps of a shelf portion 80 that supports each container 60 in the up-down direction, and store the plurality of containers 60 in a state of being separated from each other. A plurality of shelf portions 80 are provided in each step. One container 60 is able to be stored in each of the plurality of shelf portions 80.

As illustrated in Fig. 3, the control device C is configured to be communicable with the transport vehicle 100. The control device C is configured to allow the transport vehicle 100 to perform a transport instruction that designates the container 60 of a transport target, and a transport source and a transport destination of the container 60. The control device C includes, for example, a processor such as a microcomputer, peripheral circuits such as a memory, and the like. Then, each function is realized by the cooperation of the hardware and a program executed on a processor such as a computer.

The control device C is configured to manage the plurality of containers 60 handled by the container transport facility F by dividing the plurality of containers 60 into a general container 61 and a high-frequency container 62. This division is performed based on the demand for each container 60, in other words, a height of the necessity of performing target work (taking-out work of the article or inputting work of the article) in the work area 9A. The container 60 that accommodates the article of which taking-out work is frequently performed is able to be divided into the high-frequency container 62. In addition, since the necessary for performing the above-described inputting work increases, even the empty container 60 that does not accommodate the article is able to be divided into the high-frequency container 62.

In the present embodiment, the control device C is configured to manage the plurality of containers 60 by dividing the plurality of containers 60 into the general container 61 and the high-frequency container 62 having a higher frequency of being transported to the work area 9A than the general container 61 based on the type of the article accommodated in each of the containers 60. The above-described frequency of being transported is able to be expressed as a planned number of times of transport. In the present example, the container 60 that accommodates the article for which the demand in the work area 9A is relatively low is divided into the general container 61, and the container 60 that accommodates the article for which the demand in the work area 9A is relatively high is divided into the high-frequency container 62. For example, the demand for the article is quantified and a reference value is set, and the control device C may determine the container 60 that accommodates the article, which is below the reference value, as the general container 61, and may determine the container 60 that accommodates the article, which is above the reference value, as the high-frequency container 62.

In the present embodiment, the control device C is configured to periodically review the division between the general container 61 and the high-frequency container 62. As a result, the container 60 determined as the general container 61 is able to be changed to the high-frequency container 62. On the contrary, the container 60 determined as the high-frequency container 62 is able to be changed to the general container 61. The period for reviewing the division may be appropriately determined according to the use, the capacity, the scale, and the like of the container transport facility F.

In the present embodiment, the control device C is configured to define the container 60 in which the frequency of being transported to the work area 9A in the high-frequency container 62 is equal to or greater than a predetermined threshold value as an ultrahigh-frequency container 63. In other words, the control device C is configured to determine that the container 60 of which the planned number of times of transport is equal to or greater than the threshold value is the ultrahigh-frequency container 63.

Next, a configuration of the transport vehicle 100 will be described in detail. Hereinafter, a direction in which a traveling body 10 travels is referred to as a "vehicle body front-rear direction L", and a direction orthogonal to the vehicle body front-rear direction L in the up-down direction view is referred to as a "vehicle body width direction W'.

As illustrated in Fig. 4, the transport vehicle 100 is configured to transport the containers 60 configured to be step-stackable in the up-down direction.

The transport vehicle 100 includes the traveling body 10 that travels, the support portion 2 that is mounted on the traveling body 10 and supports the plurality of containers 60 as the step-stacking container group 6G which is a container group in a step-stacked state, a first transfer device 4 that is mounted on the traveling body 10 and transfers the containers 60 between the storage shelf 8 and the step-stacking container group 6G supported by the support portion 2, and a second transfer device 22 that is mounted on the traveling body 10 and transfers the step-stacking container group 6G. In the present embodiment, the transport vehicle 100 further includes a lifting device 3 that is mounted on the traveling body 10 and is able to lift a part or all of the containers 60 of the step-stacking container group 6G supported by the support portion 2.

The traveling body 10 is configured to travel on a floor surface. The traveling body 10 includes a plurality of traveling wheels 11. The plurality of traveling wheels 11 include a pair of drive wheels 11a that are disposed to be spaced apart from each other in the vehicle body width direction W, and a plurality of driven wheels 11b.

Each of the pair of drive wheels 11a is independently driven by a wheel drive source (not illustrated), such as a motor. For example, the traveling body 10 is able to turn in place about an upper and lower axial center by rotationally driving each of the pair of drive wheels 11a in opposite directions with respect to each other.

Each of the plurality of driven wheels 11b is supported by the traveling body 10 so as to be rotatable about an axial center along the up-down direction. That is, the direction along the rotation axis of each of the driven wheels 11b may be changed in a horizontal plane. In the present example, each of the driven wheels 11b is configured as a caster.

The support portion 2 is configured to support the plurality of containers 60 as the step-stacking container group 6G in the step-stacked state. The support portion 2 is also able to support a single container 60. In the present embodiment, a step-stacking region 2A in which the step-stacking container group 6G is disposed is defined above the support portion 2.

The step-stacking region 2A is a three-dimensional imaginary region that extends upward from the support portion 2.

The second transfer device 22 is configured to transfer the step-stacking container group 6G supported by the support portion 2 along the vehicle body width direction W. The second transfer device 22 is configured by using a conveyor. As such a conveyor, a well-known conveyor such as a roller conveyor, a chain conveyor, or a belt conveyor may be used. In the present embodiment, the second transfer device 22 and the support portion 2 are integrally configured.

The lifting device 3 includes a lifting mast 30 that is erected upward from the traveling body 10, a lifting and lowering body 30B that is connected to the lifting mast 30, a frame member 31 that is connected to the lifting and lowering body 30B, and a lifting and lowering body drive unit (not illustrated) that lifts and lowers the lifting and lowering body 30B, and the frame member 31 along the lifting mast 30. Although detailed illustration is omitted, the lifting and lowering body drive unit is configured as, for example, a motor for rotationally driving a rotation body around which an endless body such as a belt is wound.

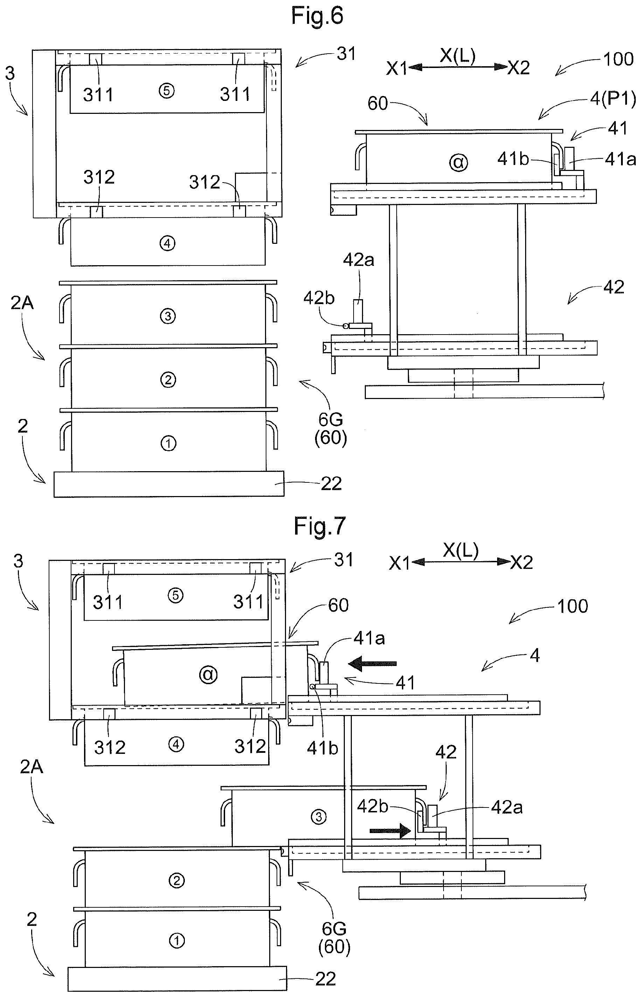

As illustrated in Fig. 6 and the like, in the present embodiment, the lifting device 3 includes a first lifting holding portion 311 that lifts the container 60 at any height in the step-stacking container group 6G step-stacked in the step-stacking region 2A to the container 60 adjacent to a container 60 below the container 60, and a second lifting holding portion 312 that lifts the container 60 below the container 60 lifted by the first lifting holding portion 311 to the container 60 adjacent to a container 60 below the container 60. The first lifting holding portion 311 and the second lifting holding portion 312 are supported by the frame member 31.

In the present embodiment, the first lifting holding portion 311 and the second lifting holding portion 312 are disposed to be spaced apart from each other in the up-down direction. As a result, it is possible to form a space between the container 60 lifted by the first lifting holding portion 311 and the container 60 lifted by the second lifting holding portion 312 in the up-down direction. In addition, it is possible to form a space in the up-down direction below the container 60 lifted by the second lifting holding portion 312.

As illustrated in Fig. 4, the first transfer device 4 includes a transfer mast 40 that is fixed to the traveling body 10 and is disposed along the up-down direction, a transfer lifting and lowering body 40B that lifts and lowers along the transfer mast 40, and a transfer lifting and lowering body drive unit (not illustrated) that lifts and lowers the transfer lifting and lowering body 40B along the transfer mast 40. Although detailed illustration is omitted, the transfer lifting and lowering body drive unit is configured, for example, as a motor for rotationally driving a rotation body around which an endless body such as a belt is wound.

In the present embodiment, the first transfer device 4 includes an upper transfer portion 41, a lower transfer portion 42 disposed below the upper transfer portion 41, and a turning device 5. The upper transfer portion 41, the lower transfer portion 42, and the turning device 5 are connected to the transfer lifting and lowering body 40B. The upper transfer portion 41 and the lower transfer portion 42 are configured to integrally lift and lower by the lifting and lowering of the transfer lifting and lowering body 40B, integrally turn about the upper and lower axial center by the turning device 5, and individually transfer the container 60.

In the present embodiment, the first transfer device 4 is configured to transfer the container 60 along the horizontal direction by the upper transfer portion 41 and the lower transfer portion 42. In a case in which a direction in which the container 60 is transferred by the first transfer device 4 is defined as a "transfer direction X", in the example illustrated in Fig. 4, the transfer direction X is equal to the vehicle body front-rear direction L.

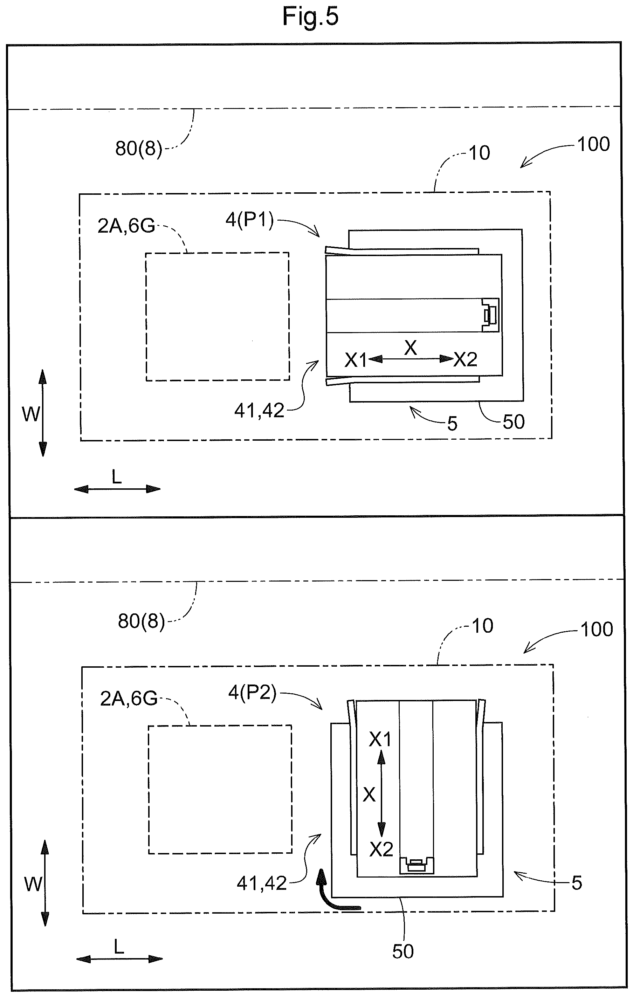

As illustrated in Fig. 5, the first transfer device 4 is configured to change an attitude between a first attitude P1 in which the transfer direction X directs to the step-stacking region 2A and a second attitude P2 in which the transfer direction X directs to the storage shelf 8 by turning the upper transfer portion 41 and the lower transfer portion 42 around the up-down axial center by the turning device 5. As described above, in the present embodiment, the transfer direction X is able to be changed in the horizontal plane by the turning device 5.

In the present embodiment, the first transfer device 4 changes the attitude according to a position of a transfer target location. Specifically, the first transfer device 4 takes the first attitude P1 in a case in which the transfer target location is the step-stacking region 2A, and takes the second attitude P2 in a case in which the transfer target location is the storage shelf 8 (shelf portion 80). As illustrated in Fig. 4, in the present example, the turning device 5 includes a turning table 50 that supports the upper transfer portion 41 and the lower transfer portion 42, a turning shaft 51 that supports the turning table 50 to be turnable with respect to the transfer lifting and lowering body 40B, and a turning drive unit (not illustrated) that drives the turning shaft 51.

Next, a transfer operation in a case in which the first transfer device 4 transfers the container 60 between the step-stacking region 2A will be described with reference to Figs. 6 to 8. The transfer operation includes a handover operation of handing over the container 60 and a receiving operation of receiving the container 60. Hereinafter, one side in the transfer direction X is referred to as a "first side X1 in the transfer direction", and the other side is referred to as a "second side X2 in the transfer direction".

In the present embodiment, the upper transfer portion 41 includes an upper pressing portion 41a that presses the container 60 toward the first side X1 in the transfer direction in a case of performing the handover operation of the container 60, and an upper locking portion 41b that is locked to the container 60 and pulls the container 60 toward the second side X2 in the transfer direction in a case of performing the receiving operation of the container 60. As described above, in the present embodiment, the upper transfer portion 41 is configured in a so-called push-pull type. However, the upper transfer portion 41 is not limited to such a configuration, and may be configured in a fork type.

Similarly, the lower transfer portion 42 includes a lower pressing portion 42a that presses the container 60 toward the first side X1 in the transfer direction in a case of performing the handover operation of the container 60, and a lower locking portion 42b that is locked to the container 60 and pulls the container 60 toward the second side X2 in the transfer direction in a case of performing the receiving operation of the container 60. As described above, in the present embodiment, the lower transfer portion 42 is configured in a so-called push-pull type. However, the lower transfer portion 42 is not limited to such a configuration, and may be configured in a fork type.

In the present embodiment, each of the upper locking portion 41b and the lower locking portion 42b is configured to be driven by a drive unit (not illustrated) to change the attitude between a locking attitude in which each thereof is locked to the container 60 and a non-locking attitude in which each thereof is not locked to the container 60.

Figs. 6 to 8 illustrate a transfer operation of the container 60 to the step-stacking region 2A. As described above, in the present embodiment, the lifting device 3 is able to form spaces between the plurality of containers 60 step-stacked in the step-stacking region 2A in the up-down direction. Then, the first transfer device 4 transfers the container 60 to the step-stacking region 2A by using these spaces. In the present embodiment, the first transfer device 4 is configured to perform the handover operation and the receiving operation of the container 60 with respect to the step-stacking region 2A. The first transfer device 4 is able to perform a parallel operation of handing over and receiving the container 60 in parallel with respect to the step-stacking region 2A.

Figs. 6 to 8 illustrate an example in which the containers 60 of five steps are step-stacked in the step-stacking region 2A as the step-stacking container group 6G. In the drawings, respective containers 60 step-stacked in a row from the bottom to the top are marked with the number of "1 to 5". In addition, a character "α" is added to the container 60, which is the handover target, held by the upper transfer portion 41. In the example illustrated below, the container 60 (container "α") of the handover target is handed over to the fourth-step container 60 (container "4") by using a space formed between the fifth-step container 60 (container "5") and the fourth-step container 60 (container "4") in the up-down direction by the lifting device 3. In addition, in parallel with this, the third-step container 60 (container "3") is received by using a space formed below the fourth-step container 60 (container "4") by the lifting device 3.

As illustrated in Fig. 7, the first transfer device 4 moves the lower locking portion 42b in the locking attitude to the second side X2 in the transfer direction in a state in which the lower locking portion 42b is locked to the container 60 (container "3"). The first transfer device 4 moves the upper pressing portion 41a to the first side X1 in the transfer direction in a state in which the container 60 (container "α") held by the upper transfer portion 41 is pressed by the upper pressing portion 41a, in parallel with this. As a result, the lower locking portion 42b pulls the container 60 (container "3") of the receiving target to the second side X2 in the transfer direction, and the upper pressing portion 41a presses the container 60 (container "α") of the handover target to the first side X1 in the transfer direction.

Then, the lower transfer portion 42 receives the container 60 (container "3") as the receiving target, which is pulled in by the lower locking portion 42b, and the upper transfer portion 41 disposes the container 60 (container "α") as the handover target, which is pressed by the upper pressing portion 41a, above the container 60 (container "4") lifted by the second lifting holding portion 312 and fits it into the container 60 (container "4"). As a result, the step-stacking container group 6G in the step-stacking region 2A is in a state as illustrated in Fig. 8. That is, the container 60 (container "3") which is a part of the plurality of containers 60 disposed in the step-stacking region 2A is exchanged with the new container 60 (container "α").

Here, as illustrated in Fig. 1, in the container transport facility F according to the present disclosure, a holding area 7A is provided at a location different from the work area 9A and the storage shelf 8. The holding area 7A is an area where the plurality of containers 60 are able to be held as the step-stacking container group 6G, unlike the storage shelf 8 for storing the plurality of containers 60 in a state of being separated from each other.

The holding area 7A includes a holding portion 70 that holds the step-stacking container group 6G. As a result, in the holding area 7A, the step-stacking container group 6G is able to be held. In the present embodiment, the holding portion 70 is configured to be able to hold a plurality of step-stacking container groups 6G (see also Fig. 9). The holding area 7A includes a plurality of such holding portions 70.

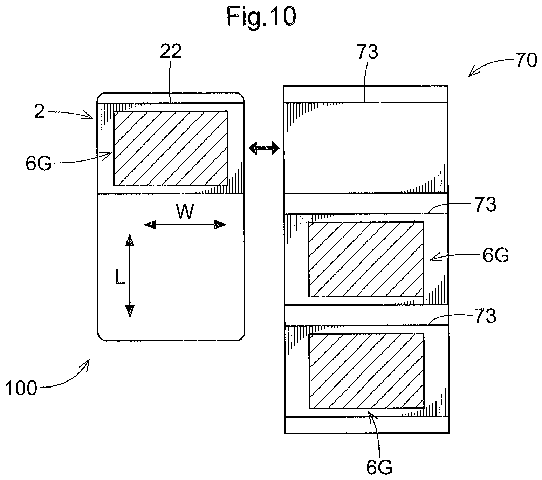

As illustrated in Figs. 9 and 10, the holding portion 70 is configured to enable the transfer of the step-stacking container group 6G between the holding portion 70 and the support portion 2 by the second transfer device 22 of the transport vehicle 100. In the present embodiment, the holding portion 70 includes one or a plurality of third transfer devices 73. In the illustrated example, the holding portion 70 includes three third transfer devices 73. In the present example, the third transfer device 73 is configured by using a conveyor. As such a conveyor, a well-known conveyor such as a roller conveyor, a chain conveyor, or a belt conveyor may be used.

The third transfer device 73 of the holding portion 70 and the second transfer device 22 of the transport vehicle 100 are configured to deliver the step-stacking container group 6G to each other. That is, in the present embodiment, the second transfer device 22 of the transport vehicle 100 is configured to be able to transfer the entire step-stacking container group 6G supported by the support portion 2 to the holding portion 70 and to transfer the entire step-stacking container group 6G held by the holding portion 70 to the support portion 2.

As illustrated in Fig. 10, in a state in which the transport vehicle 100 is stopped at a position adjacent to the holding portion 70 in the vehicle body width direction W, the step-stacking container group 6G, which is the transfer target, is transferred along the vehicle body width direction W. In the present embodiment, the transport vehicle 100 and the holding portion 70 are configured to be communicable with each other, and are configured to cooperate with each other to transfer the step-stacking container group 6G. For example, the transport vehicle 100 transmits a transfer signal for transferring the step-stacking container group 6G to the holding portion 70 in a state of being stopped at a position adjacent to the holding portion 70 in the vehicle body width direction W, and operates the second transfer device 22. The holding portion 70 that receives the transfer signal operates the third transfer device 73. As a result, the third transfer device 73 of the holding portion 70 and the second transfer device 22 of the transport vehicle 100 deliver the step-stacking container groups 6G to each other.

As illustrated in Fig. 1, the holding area 7A is disposed in a region between the storage shelf 8 and the work area 9A. In the present embodiment, the holding area 7A is disposed in a region between the storage shelf 8 and the work area 9A in a direction in which the storage shelf 8 extends, that is, in a direction in which the shelf region inner path R8 extends.

In the present embodiment, the holding portion 70 of the holding area 7A is disposed at a position along a connection path R7 connecting the shelf region inner path R8 and the delivery portion 90 of the work area 9A. The shelf region inner path R8 and the connection path R7 have a linear shape. In the present example, a plurality of shelf region inner paths R8 are provided in accordance with the number of the storage shelves 8, and the same number of connection paths R7 as the plurality of shelf region inner paths R8 are provided. Each of the plurality of holding portions 70 provided in the holding area 7A is disposed at a position along any of the plurality of connection paths R7.

In the present embodiment, the transport vehicle 100 transports the step-stacking container group 6G including the high-frequency container 62 (see Fig. 9) at least in part to the holding area 7A based on an instruction from the control device C. As a result, the high-frequency container 62 is able to be disposed in the holding area 7A located at a location different from the storage shelf 8, and the general container 61 and the high-frequency container 62 is able to be easily physically divided. In addition, in the present embodiment, as described above, the holding area 7A is disposed in a region between the storage shelf 8 and the work area 9A. Therefore, by disposing the high-frequency container 62 having a high frequency of being transported to the work area 9A in the holding area 7A, the high-frequency container 62 is able to be disposed at a position close to the work area 9A. It is preferable that all the step-stacking container groups 6G in the holding area 7A are configured by the high-frequency containers 62. In addition, unnecessary empty container 60 is able to also be accumulated in the holding area 7A as the high-frequency container 62. In this case, a plurality of unnecessary empty containers 60 are easily moved to the outside of the holding area 7A in a lump.

Although detailed illustration is omitted, in the present embodiment, the transport vehicle 100 travels a path which returns to the delivery portion 90 from the delivery portion 90 of the work area 9A via both the storage shelf 8 and the holding area 7A based on an instruction from the control device C. The order in which the storage shelf 8 and the holding area 7A are passed through may be any. As a result, both the container 60 stored in the storage shelf 8 and the container 60 held in the holding area 7A are able to be transported to the work area 9A, and the container 60 for which target work in the work area 9A is completed is able to be returned to either the storage shelf 8 or the holding area 7A.

Here, as described above, the control device C is configured to periodically review the division between the general container 61 and the high-frequency container 62. As a result of the review of this division, the high-frequency container 62 may be changed to the general container 61, and the general container 61 may be changed to the high-frequency container 62. In the present embodiment, the transport vehicle 100 transports the container 60 changed from the high-frequency container 62 to the general container 61 from the holding area 7A to the storage shelf 8 or transports the container 60 changed from the general container 61 to the high-frequency container 62 from the storage shelf 8 to the holding area 7A based on an instruction from the control device C. The transportation of the container 60 after such a change may be performed during the operation of the facility or may be performed during the non-operation of the facility, such as at night. In a case in which the container 60 after the change is transported during the operation of the facility, a part of the plurality of transport vehicles 100 may be used as a transport dedicated to the container 60 after the change.

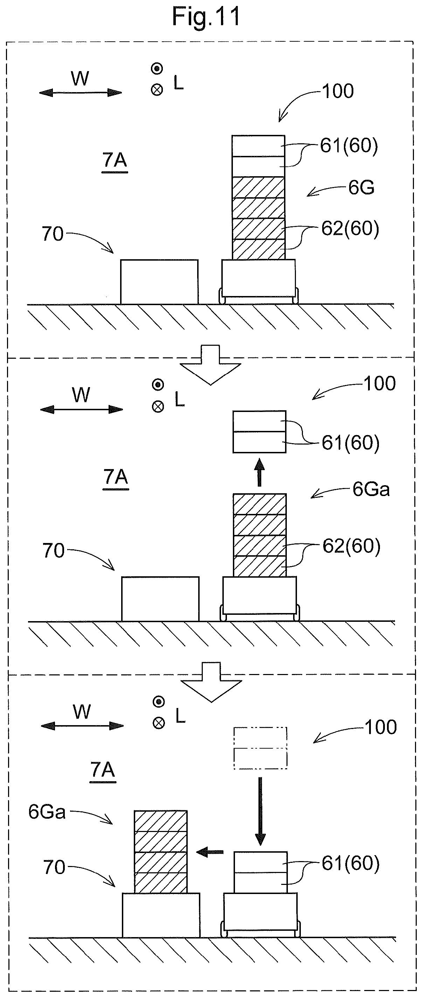

As described above, the second transfer device 22 of the transport vehicle 100 is configured to be able to transfer the step-stacking container group 6G supported by the support portion 2 to the holding portion 70 of the holding area 7A. In the present embodiment, the transport vehicle 100 is configured to be able to transfer a part of the plurality of containers 60 constituting the step-stacking container group 6G supported by the support portion 2 to the holding portion 70 of the holding area 7A. The transport vehicle 100 is configured to be able to transfer a part of the step-stacking container group 6G to the holding portion 70 of the holding area 7A by separating the part by using the lifting device 3 (see Fig. 6 and the like). Hereinafter, the description will be made with reference to Fig. 11. In Fig. 11, the lifting device 3 and elements that are not necessary for the description are omitted.

As illustrated in Fig. 11, in the step-stacking container group 6G supported by the support portion 2 of the transport vehicle 100, at least one container 60 that is not lifted by the lifting device 3 is defined as a residual container group 6Ga. In the present embodiment, the second transfer device 22 of the transport vehicle 100 is configured to transfer the residual container group 6Ga to the holding portion 70. In the illustrated example, the transport vehicle 100 separates the plurality or single general container 61 and the plurality or single high-frequency container 62 from the plurality of containers 60 constituting the step-stacking container group 6G by the lifting device 3. Then, the transport vehicle 100 hands over the plurality of or single high-frequency container 62 (residual container group 6Ga) to the holding portion 70 by the second transfer device 22. As a result, the transport vehicle 100 is able to hand over only the high-frequency container 62 to the holding portion 70 even in a case in which the step-stacking container group 6G includes the general container 61 and the high-frequency container 62. The transport vehicle 100 is not limited to the high-frequency container 62, and a part of the plurality of containers 60 constituting the step-stacking container group 6G is able to be selected to hand over the selected part of the containers 60 (plurality or single container 60) to the holding portion 70.

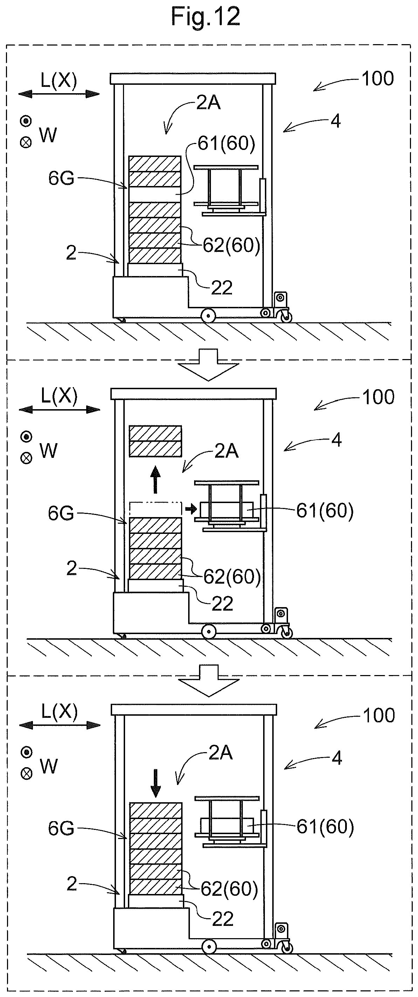

As illustrated in Fig. 12, in the present embodiment, the transport vehicle 100 is configured to create the step-stacking container group 6G configured of only the high-frequency containers 62 based on an instruction from the control device C and transport the step-stacking container group 6G to the holding area 7A. In the present example, the transport vehicle 100 lifts any part of the containers 60 of the step-stacking container group 6G supported by the support portion 2 by the lifting device 3 (not illustrated in Fig. 12), and removes the container 60 adjacent to the lower side of the lifted container 60 from the step-stacking container group 6G by the first transfer device 4 to create a new step-stacking container group 6G using a plurality of containers 60 other than the removed container 60.

In the example illustrated in Fig. 12, seven containers 60 constitute the step-stacking container group 6G in the support portion 2 of the transport vehicle 100. Among the seven containers 60, only the third container 60 from above is the general container 61, and the other containers 60 are the high-frequency containers 62. The transport vehicle 100 lifts the high-frequency container 62 of the second step or higher from above by the lifting device 3. As a result, the general container 61 that is originally disposed on the third step from above is disposed on the uppermost step among the plurality of containers 60 supported by the support portion 2. Then, the transport vehicle 100 removes the general container 61 from the step-stacking container group 6G by the first transfer device 4. Finally, the transport vehicle 100 places the high-frequency containers 62 of the second step or higher from above, which are lifted by the lifting device 3, on the plurality of high-frequency containers 62 supported by the support portion 2. As a result, the step-stacking container group 6G configured of only the high-frequency containers 62 is newly created.

In the above description, the example is described in which the step-stacking container group 6G configured of only the high-frequency containers 62 is created, but the step-stacking container group 6G configured of only the ultrahigh-frequency containers 63 (see Fig. 3) is able to also be created. That is, the transport vehicle 100 may be configured to create the step-stacking container group 6G configured of only the ultrahigh-frequency containers 63 and transport the step-stacking container group 6G to the holding area 7A based on an instruction from the control device C.

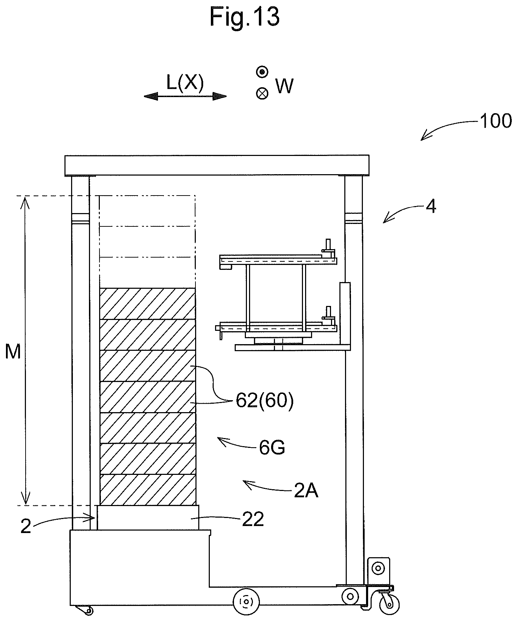

As illustrated in Fig. 13, the number of the containers 60, which is the upper limit thereof that is able to be supported by the transport vehicle 100 on the support portion 2, is defined as a support upper limit number M. In the present embodiment, in a case in which the transport vehicle 100 receives the container 60 in both the storage shelf 8 and the holding area 7A, the number of the containers 60 received from the storage shelf 8 and supported by the support portion 2 is set to be equal to or less than a difference between the support upper limit number M and the number of the containers 60 included in the step-stacking container group 6G received from the holding portion 70 of the holding area 7A.

In the example illustrated in Fig. 13, the support upper limit number M is "10", and the number of the containers 60 included in the step-stacking container group 6G received by the transport vehicle 100 from the holding portion 70 of the holding area 7A is "7". Therefore, the number of the containers 60 that are able to be received by the transport vehicle 100 from the storage shelf 8 and supported by the support portion 2 is "3" or less. As a result, even in a case in which the transport vehicle 100 receives the containers 60 in both the storage shelf 8 and the holding area 7A, the step-stacking container group 6G held by the holding portion 70 of the holding area 7A is able to be received and supported by the support portion 2 without being separated.

Hereinafter, other embodiments will be described.
(1) In the embodiment described above, an example is described in which the second transfer device 22 is configured by using the conveyor. However, the present invention is not limited to such an example, and the second transfer device 22 may be configured by using a fork. Alternatively, the second transfer device 22 may be configured by using a robot arm.
(2) In the embodiment described above, an example is described in which the third transfer device 73 is configured by using the conveyor. However, the present invention is not limited to such an example, and the third transfer device 73 may be configured by using, for example, a robot arm.
(3) In the embodiment described above, an example is described in which the holding area 7A is disposed in the region between the storage shelf 8 and the work area 9A. However, the present invention is not limited to such an example, and the holding area 7A may spread to include a part of the work area 9A. In this case, the holding portion 70 of the holding area 7A may be disposed adjacent to the delivery portion 90 of the work area 9A. As a result, it is possible to expect an improvement in the efficiency of target work in the work area 9A. An aspect in which the holding area 7A is provided to partially overlap with the work area 9A is also included in an aspect in which "the holding area 7A is provided at a location different from the work area 9A and the storage shelf 8".
(4) In the embodiment described above, an example is described in which the shelf region inner path R8 and the connection path R7 have a linear shape. However, the present invention is not limited to such examples, and at least one of the shelf region inner path R8 or the connection path R7 may have a curved shape or a bent shape.
(5) In addition, the configuration disclosed in the above embodiment is able to be applied in combination with the configuration disclosed in another embodiment as long as no contradiction occurs. The other configurations are also merely examples in all aspects of the embodiments disclosed in the present specification. Accordingly, various modifications are able to be appropriately made without departing from the scope of the present disclosure. The invention is moreover defined in the appended claims.

### REFERENCE SIGNS

- 2: support portion
- 2A: step-stacking region
- 3: lifting device
- 4: first transfer device
- 5: turning device
- 6G: step-stacking container group
- 6Ga: residual container group
- 7A: holding area
- 8: storage shelf
- 8A: storage area
- 9A: work area
- 10: traveling body
- 11: traveling wheel
- 11a: drive wheel
- 11b: driven wheel
- 22: second transfer device
- 30: lifting mast
- 30B: lifting and lowering body
- 31: frame member
- 40: transfer mast
- 40B: transfer lifting and lowering body
- 41: upper transfer portion
- 41a: upper pressing portion
- 41b: upper locking portion
- 42: lower transfer portion
- 42a: lower pressing portion
- 42b: lower locking portion
- 50: turning table
- 51: turning shaft
- 60: container
- 61: general container
- 62: high-frequency container
- 63: ultrahigh-frequency container
- 70: holding portion
- 73: third transfer device
- 80: shelf portion
- 90: delivery portion
- 100: transport vehicle
- 311: first lifting holding portion
- 312: second lifting holding portion

- F: container transport facility
- L: vehicle body front-rear direction
- M: support upper limit number
- P1: first attitude
- P2: second attitude
- R7: connection path
- R8: shelf region inner path
- W: vehicle body width direction
- X: transfer direction
- X1: first side in the transfer direction
- X2: second side in the transfer direction

## Claims

1. A container transport facility (F), comprising:
a transport vehicle (100) configured to transport at least one container (60) that is configured to be step-stacked in an up-down direction;
a storage shelf (8) configured to store the container (60); and
a work area (9A) in which target work, which is at least one of taking-out work of an article from the container (60) and inputting work of the article into the container (60), is performed,
wherein the at least one container includes a plurality of containers (60), the storage shelf (8) is configured to include a plurality of steps of a shelf portion (80) that supports each container (60) in the up-down direction, and store the plurality of containers (60) in a state of being separated from each other,
the transport vehicle (100) includes
a traveling body (10) configured to travel,
a support portion (2) configured to be mounted on the traveling body (10) and support the plurality of containers (60) as a step-stacking container group (6G) which is a container group in a step-stacked state,
a first transfer device (4) configured to be mounted on the traveling body (10) and transfer the containers (60) between the storage shelf (8) and the step-stacking container group (6G) supported by the support portion (2), and
a second transfer device (22) configured to be mounted on the traveling body (10) and transfer the step-stacking container group (6G),
the work area (9A) is provided with a delivery portion (90) through which the step-stacking container group (6G) is delivered between the delivery portion (90) and the support portion (2),
**characterised in that** said container transport facility (F) further comprises:
a holding area (7A) being provided at a location different from the work area (9A) and the storage shelf (8),
the holding area (7A) including a holding portion (70) configured to hold the step-stacking container group (6G), and
the holding portion (70) being configured to transfer the step-stacking container group (6G) between the holding portion (70) and the support portion (2) by the second transfer device (22).

2. The container transport facility (F) according to claim 1,
wherein a path of the transport vehicle (100) extending along the storage shelf (8) is defined as a shelf region inner path (R8), and
the holding portion (70) of the holding area (7A) is disposed at a position along a connection path (R7) connecting the shelf region inner path (R8) and the delivery portion (90).

3. The container transport facility (F) according to claim 1 or 2, further comprising:
a control system (C) configured to control the transport vehicle (100),
wherein the holding area (7A) is disposed in a region between the storage shelf (8) and the work area (9A),
the control system (C) is configured to manage the plurality of containers (60) by dividing the plurality of containers (60) into a general container (61) and a high-frequency container (62) having a higher frequency of being transported to the work area (9A) than the general container (61) based on a type of the article accommodated in each of the containers (60), and
the transport vehicle (100) transports the step-stacking container group (6G) including the high-frequency container (62) at least in part to the holding area (7A) based on an instruction from the control system (C).

4. The container transport facility (F) according to claim 3,
wherein the control system (C) periodically reviews the division between the general container (61) and the high-frequency container (62), and
the transport vehicle (100) transports the container (60) changed from the high-frequency container (62) to the general container (61) from the holding area (7A) to the storage shelf (8) or transports the container (60) changed from the general container (61) to the high-frequency container (62) from the storage shelf (8) to the holding area (7A) based on an instruction from the control system (C).

5. The container transport facility (F) according to claim 3 or 4,
wherein the control system (C) defines the container (60) in which a frequency of being transported to the work area (9A) in the high-frequency container (62) is equal to or greater than a predetermined threshold value as an ultrahigh-frequency container (63), and
the transport vehicle (100) creates the step-stacking container group (6G) configured of only the ultrahigh-frequency containers (63) and transports the step-stacking container group (6G) to the holding area (7A) based on an instruction from the control system (C).

6. The container transport facility (F) according to any one of claims 1 to 5, further comprising:
a control system (C) configured to control the transport vehicle (100),
wherein the transport vehicle (100) travels a path which returns to the delivery portion (90) from the delivery portion (90) of the work area (9A) via both the storage shelf (8) and the holding area (7A) based on an instruction from the control system (C).

7. The container transport facility (F) according to claim 6,
wherein the number of the containers (60), which is an upper limit that is able to be supported in the support portion (2) by the transport vehicle (100), is defined as a support upper limit number (M), and
in a case in which the transport vehicle (100) receives the container (60) in both the storage shelf (8) and the holding area (7A), the number of the containers (60) received from the storage shelf (8) and supported by the support portion (2) is set to be equal to or less than a difference between the support upper limit number (M) and the number of the containers (60) included in the step-stacking container group (6G) received from the holding portion (70) of the holding area (7A).

8. The container transport facility (F) according to any one of claims 1 to 7,
wherein the transport vehicle (100) further includes a lifting device (3) configured to be mounted on the traveling body (10) and lift a part or all of the containers (60) of the step-stacking container group (6G) supported by the support portion (2),
in the step-stacking container group (6G) supported by the support portion (2), at least one container (60) that is not lifted by the lifting device (3) is defined as a residual container group (6Ga), and
the second transfer device (22) is configured to transfer the step-stacking container group (6G) supported by the support portion (2) to the holding portion (70), to transfer the residual container group (6Ga) to the holding portion (70), and to transfer the step-stacking container group (6G) held by the holding portion (70) to the support portion (2).

## Patentansprüche

1. Behältertransportanlage (F), umfassend:
ein Transportfahrzeug (100), das ausgebildet ist, wenigstens einen Behälter (60) zu transportieren, der ausgebildet ist in einer Auf-Ab-Richtung gestapelt zu werden;
ein Lagerregal (8), das ausgebildet ist, den Behälter (60) zu lagern; und
einen Arbeitsbereich (9A), in dem eine Zielarbeit durchgeführt wird, die wenigstens eines von einer Entnahmearbeit eines Artikels aus dem Behälter (60) und einer Eingabearbeit des Artikels in den Behälter (60) ist,
wobei der wenigstens eine Behälter eine Vielzahl von Behältern (60) beinhaltet, das Lagerregal (8) ausgebildet ist, eine Vielzahl von Stufen eines Regalabschnitts (80) zu beinhalten, der jeden Behälter (60) in der Auf-Ab-Richtung trägt, und die Vielzahl von Behältern (60) in einem Zustand zu lagern, in dem sie voneinander getrennt sind,
wobei das Transportfahrzeug (100) beinhaltet
einen Fahrkörper (10), der ausgebildet ist zu fahren,
einen Stützabschnitt (2), der ausgebildet ist, an dem Fahrkörper (10) montiert zu sein und die Vielzahl von Behältern (60) als eine Stufenstapel-Behältergruppe (6G) zu stützen, die eine Behältergruppe in einem stufenweise gestapelten Zustand ist,
eine erste Transfervorrichtung (4), die ausgebildet ist, an dem Fahrkörper (10) montiert zu sein und die Behälter (60) zwischen dem Lagerregal (8) und der Stufenstapel-Behältergruppe (6G), die von dem Stützabschnitt (2) gestützt wird, zu transferieren, und
eine zweite Transfervorrichtung (22), die ausgebildet ist, an dem Fahrkörper (10) montiert zu sein und die Stufenstapel-Behältergruppe (6G) zu transferieren,
wobei der Arbeitsbereich (9A) mit einem Lieferabschnitt (90) versehen ist, durch den die Stufenstapel-Behältergruppe (6G) zwischen dem Lieferabschnitt (90) und dem Stützabschnitt (2) geliefert wird,
**dadurch gekennzeichnet, dass** die Behältertransportanlage (F) ferner umfasst:
einen Haltebereich (7A), der an einem Ort vorgesehen ist, der sich von dem Arbeitsbereich (9A) und dem Lagerregal (8) unterscheidet,
wobei der Haltebereich (7A) einen Halteabschnitt (70) beinhaltet, der ausgebildet ist, die Stufenstapel-Behältergruppe (6G) zu halten, und
wobei der Halteabschnitt (70) ausgebildet ist, die Stufenstapel-Behältergruppe (6G) zwischen dem Halteabschnitt (70) und dem Stützabschnitt (2) durch die zweite Transfervorrichtung (22) zu transferieren.

2. Behältertransportanlage (F) gemäß Anspruch 1,
wobei ein Weg des Transportfahrzeugs (100), der sich entlang des Lagerregals (8) erstreckt, als ein Regalbereichsinnenweg (R8) definiert ist, und
der Halteabschnitt (70) des Haltebereichs (7A) an einer Position entlang eines Verbindungswegs (R7) angeordnet ist, der den Regalbereichsinnenweg (R8) und den Lieferabschnitt (90) verbindet.

3. Behältertransportanlage (F) gemäß Anspruch 1 oder 2, ferner umfassend:
ein Steuersystem (C), das ausgebildet ist, das Transportfahrzeug (100) zu steuern,
wobei der Haltebereich (7A) in einem Bereich zwischen dem Lagerregal (8) und dem Arbeitsbereich (9A) angeordnet ist,
wobei das Steuersystem (C) ausgebildet ist, die Vielzahl von Behältern (60) zu verwalten, indem es die Vielzahl von Behältern (60) auf Basis einer in jedem der Behälter (60) untergebrachten Artikel-Art in einen allgemeinen Behälter (61) und einen Hochfrequenz-Behälter (62) unterteilt, der mit einer höheren Frequenz als der allgemeine Behälter (61) zu dem Arbeitsbereich (9A) transportiert wird, und
das Transportfahrzeug (100) auf Basis einer Anweisung von dem Steuersystem (C) die Stufenstapel-Behältergruppe (6G), die zumindest teilweise den Hochfrequenz-Behälter (62) beinhaltet, zu dem Haltebereich (7A) transportiert.

4. Behältertransportanlage (F) gemäß Anspruch 3,
wobei das Steuersystem (C) periodisch die Aufteilung zwischen dem allgemeinen Behälter (61) und dem Hochfrequenz-Behälter (62) überprüft, und
das Transportfahrzeug (100) auf Basis einer Anweisung von dem Steuersystem (C) den von dem Hochfrequenz-Behälter (62) zu dem allgemeinen Behälter (61) gewechselten Behälter (60) von dem Haltebereich (7A) zu dem Lagerregal (8) transportiert oder den von dem allgemeinen Behälter (61) zu dem Hochfrequenz-Behälter (62) gewechselten Behälter (60) von dem Lagerregal (8) zu dem Haltebereich (7A) transportiert.

5. Behältertransportanlage (F) gemäß Anspruch 3 oder 4,
wobei das Steuersystem (C) den Behälter (60), bei dem die Frequenz des Transports zum Arbeitsbereich (9A) in dem Hochfrequenz-Behälter (62) gleich oder größer als ein vorbestimmter Schwellenwert ist, als einen Ultrahochfrequenz-Behälter (63) definiert, und das Transportfahrzeug (100) auf Basis einer Anweisung von dem Steuersystem (C) die Stufenstapel-Behältergruppe (6G) erzeugt, die nur aus den Ultrahochfrequenz-Behältern (63) gebildet ist, und die Stufenstapel-Behältergruppe (6G) zu dem Haltebereich (7A) transportiert.

6. Behältertransportanlage (F) gemäß einem der Ansprüche 1 bis 5, ferner umfassend:
ein Steuersystem (C), das ausgebildet ist, das Transportfahrzeug (100) zu steuern,
wobei das Transportfahrzeug (100) auf Basis einer Anweisung von dem Steuersystem (C) einen Weg fährt, der sowohl über das Lagerregal (8) als auch über den Haltebereich (7A) von dem Lieferabschnitt (90) des Arbeitsbereichs (9A) zu dem Lieferabschnitt (90) zurückkehrt.

7. Behältertransportanlage (F) gemäß Anspruch 6,
wobei die Anzahl der Behälter (60), die eine Obergrenze darstellt, die von dem Transportfahrzeug (100) in dem Stützabschnitt (2) gestützt werden kann, als eine Stützobergrenzenzahl (M) definiert ist, und
in einem Fall, in dem das Transportfahrzeug (100) den Behälter (60) sowohl in dem Lagerregal (8) als auch in dem Haltebereich (7A) aufnimmt, die Anzahl der Behälter (60), die von dem Lagerregal (8) aufgenommen und von dem Stützabschnitt (2) gestützt werden, so eingestellt wird, dass sie gleich oder kleiner ist als eine Differenz zwischen der Stützobergrenzenzahl (M) und der Anzahl der Behälter (60), die in der Stufenstapel-Behältergruppe (6G) beinhaltet sind, die von dem Halteabschnitt (70) des Haltebereichs (7A) aufgenommen wird.

8. Behältertransportanlage (F) gemäß einem der Ansprüche 1 bis 7,
wobei das Transportfahrzeug (100) ferner eine Hebevorrichtung (3) beinhaltet, die ausgebildet ist, an dem Fahrkörper (10) montiert sein und einen Teil oder alle Behälter (60) der Stufenstapel-Behältergruppe (6G) anzuheben, die von dem Stützabschnitt (2) gestützt wird, in der Stufenstapel-Behältergruppe (6G), die von dem Stützabschnitt (2) gestützt wird, wenigstens ein Behälter (60), der nicht von der Hebevorrichtung (3) angehoben wird, als eine Rest-Behältergruppe (6Ga) definiert ist, und
die zweite Transfervorrichtung (22) ausgebildet ist, die Stufenstapel-Behältergruppe (6G), die von dem Stützabschnitt (2) gestützt wird, zu dem Halteabschnitt (70) zu transferieren, die Rest-Behältergruppe (6Ga) zu dem Halteabschnitt (70) zu transferieren, und die Stufenstapel-Behältergruppe (6G), die von dem Halteabschnitt (70) gehalten wird, zu dem Stützabschnitt (2) zu transferieren.

## Revendications

1. Installation de transport de récipients (F), comprenant :
un véhicule de transport (100) configuré pour transporter au moins un récipient (60) qui est configuré pour être empilé en direction haut-bas ;
un rayonnage de stockage (8) configuré pour stocker le récipient (60) ; et
une zone de travail (9A) dans laquelle un travail ciblé, qui est au moins un d'un travail d'enlever un article depuis le récipient (60) et un travail d'introduire l'article dans le récipient (60), est effectué,
ledit au moins un récipient (60) comprenant une pluralité de récipients (60), ledit rayonnage de stockage (8) étant configuré pour comprendre une pluralité d'échelons d'une partie de rayonnage (80) qui supporte chaque récipient (60) dans la direction haut-bas, et pour stocker la pluralité de récipients (60) dans un état où ils sont séparés l'un de l'autre,
ledit véhicule de transport (100) comprenant
un corps de déplacement (10) configuré pour se déplacer,
une partie de support (2) configurée pour être montée sur le corps de déplacement (10) et pour supporter la pluralité de récipients (60) en tant que groupe de récipients empilés (6G) qui est un groupe de récipients en état empilé,
un premier dispositif de transfert (4) configuré pour être monté sur le corps de déplacement (10) et pour transférer les récipients (60) entre le rayonnage de stockage (8) et le groupe de récipients empilés (6G) supporté par la partie de support (2), et
un deuxième dispositif de transfert (22) configuré pour être monté sur le corps de déplacement (10) et pour transférer le groupe de récipients empilés (6G),
ladite zone de travail (9A) étant dotée d'une partie de livraison (90) dans laquelle le groupe de récipients empilés (6G) est destiné à être livré entre ladite partie de livraison (90) et la partie de support (2),
**caractérisée en ce que** ladite installation de transport de récipients (F) comprend en outre :
une zone de retenue (7A) prévue à un endroit différent de la zone de travail (9A) et du rayonnage de stockage (8),
ladite zone de retenue (7A) comportant une partie de retenue (70) configurée pour retenir le groupe de récipients empilés (6G), et
ladite partie de retenue (70) étant configurée pour transférer le groupe de récipients empilés (6G) entre la partie de retenue (70) et la partie de support (2) moyennant le deuxième dispositif de transfert (22).

2. Installation de transport de récipients (F) selon la revendication 1, dans laquelle
une voie dudit véhicule de transport (100) s'étendant le long du rayonnage de stockage (8) est définie comme voie intérieure de zone de rayonnage (R8), et
la partie de retenue (70) de la zone de retenue (7A) est disposée dans une position le long de la voie de connexion (R7) connectant la voie intérieure de zone de rayonnage (R8) et la partie de livraison (90).

3. Installation de transport de récipients (F) selon la revendication 1 ou 2, comprenant en outre :
un système de commande (C) configurée pour commander le véhicule de transport (100),
la zone de retenue (7A) étant disposée dans une région entre le rayonnage de stockage (8) et la zone de travail (9A),
ledit système de commande (C) étant configuré pour gérer la pluralité de récipients (60) en repartant la pluralité de récipients (60) en récipient général (61) et récipient à haute fréquence (62) qui présente une fréquence supérieure d'être transporté vers la zone de travail (9A) que le récipient général (61) sur la base d'un type d'article reçu dans chacun des récipients (60), et
le véhicule de transport (100) étant destiné à transporter le groupe de récipients empilés (6G) comportant le récipient à haute fréquence (62) au moins en partie vers la zone de retenue (7A) sur la base d'une instruction du système de commande (C).

4. Installation de transport de récipients (F) selon la revendication 3, dans laquelle
le système de commande (C) est destiné à réexaminer périodiquement la répartition entre récipient général (61) et récipient à haute fréquence (62), et
le véhicule de transport (100) est destiné à transporter le récipient (60) qui a été change de récipient à haute fréquence (62) à récipient général (61) depuis la zone de retenue (7A) vers le rayonnage de stockage (8) ou à transporter le récipient (60) qui a été change de récipient général (61) à récipient à haute fréquence (62) depuis le rayonnage de stockage (8) vers la zone de retenue (7A) sur la base d'une instruction du système de commande (C).

5. Installation de transport de récipients (F) selon la revendication 3 ou 4, dans laquelle
le système de commande (C) est destiné à définir le récipient (60) pour lequel une fréquence d'être transporté vers la zone de travail (9A) dans le récipient à haute fréquence (62) est égale ou supérieure à une valeur seuil prédéterminée comme récipient à ultra-haute fréquence (63), et
le véhicule de transport (100) est destiné à créer le groupe de récipients empilés (6G) configuré uniquement des récipients à ultra-haute fréquence (63) et à transporter le groupe de récipients empilés (6G) vers la zone de retenue (7A) sur la base d'une instruction du système de commande (C).

6. Installation de transport de récipients (F) selon l'une quelconque des revendication 1 à 5, comprenant en outre :
un système de commande (C) configuré pour commander le véhicule de transport (100),
le véhicule de transport (100) étant destiné à se déplacer sur un trajet qui rentre à la partie de livraison (90) depuis la partie de livraison (90) de la zone de travail (9A) via le rayonnage de stockage (8) et la zone de retenue (7A) sur la base d'une instruction du système de commande (C).

7. Installation de transport de récipients (F) selon la revendication 6, dans laquelle
le nombre des récipients (60), qui est une limite supérieure apte à être supportée dans la partie de support (2) par le véhicule de transport (100), est défini comme nombre de limite supérieure de support (M), et
dans un cas où le véhicule de transport (100) reçoit le récipient (60) aussi bien dans le rayonnage de stockage (8) que dans la zone de retenue (7A), le nombre des récipients (60) reçu par le rayonnage de stockage (8) et supporté par la partie de support (2) est établi à être égal ou inférieur à une différence entre le nombre de limite supérieure de support (M) et le nombre des récipients (60) compris dans le groupe de récipients empilés (6G) reçus depuis la partie de retenue (70) de la zone de retenue (7A).

8. Installation de transport de récipients (F) selon l'une quelconque des revendication 1 à 7, dans laquelle
le véhicule de transport (100) comprend en outre un dispositif de levage (3) configuré pour être monté sur le corps de déplacement (10) et pour soulever une partie ou tous les récipients (60) du groupe de récipients empilés (6G) supporté par la partie de support (2),
dans le groupe de récipients empilés (6G) supporté par la partie de support (2), au moins un récipient (60) qui n'est pas soulevé par le dispositif de levage (3) est défini comme groupe de récipients résiduels (6Ga), et
le deuxième dispositif de transfert (22) est configuré pour transférer le groupe de récipients empilés (6G) supporté par la partie de support (2) vers la partie de retenue (70), pour transférer le groupe de récipients résiduels (6Ga) vers la partie de retenue (70), et pour transférer le groupe de récipients empilés (6G) retenu par la partie de retenue (70) vers la partie de support (2).
